# FASCICULE DE BREVET EUROPEEN

(11) **EP 2 658 741 B1**
(45) Date de publication et mention de la délivrance du brevet: **20.07.2016**
(21) Numéro de dépôt: 11782160.3
(22) Date de dépôt: 16.11.2011
(51) Int. Cl.: B60N 2/28, B60R 22/18

(54) **DISPOSITIF D'AIDE AU GUIDAGE D'UN PENE DE CEINTURE DE SECURITE POUR SIEGE REHAUSSEUR**
HILFSEINRICHTUNG ZUR FÜHRUNG EINER STECKZUNGE EINES SICHERHEITSGURTS FÜR EINE SITZERHÖHUNG FÜR KINDER
DEVICE HELPING GUIDING OF A SAFETY BELT TONGUE FOR CHILD BOOSTER SEAT

(30) Priorité: 29.12.2010 FR 1061327
(43) Date de publication de la demande: 06.11.2013
(73) Titulaire: Renault S.A.S., 92100 Boulogne-Billancourt (FR)
(72) Inventeur: CABRIE, Dominique, F-78000 Versailles (FR); FRANCISCO, Paulo, F-78470 Saint Remy Les Chevreuses (FR); HODIESNE, Thierry, F-28410 Boutigny-prouais (FR)
(86) Numéro de dépôt international: PCT/EP2011/070207
(87) Numéro de publication internationale: WO 2012/089401

(56) Documents cités:
- DE-A1- 10 314 042
- JP-A- 2002 079 909
- US-A1- 2007 205 644

## Description

### DOMAINE TECHNIQUE :

La présente invention concerne les systèmes de verrouillage/déverrouillage d'une ceinture de sécurité d'un véhicule automobile. L'invention concerne plus particulièrement les dispositifs facilitant le bouclage d'une personne assise sur un siège rehausseur.

### ETAT DE LA TECHNIQUE :

On entend par bouclage, l'action de verrouiller la partie d'accrochage du pêne associé à une ceinture de sécurité par les moyens de verrouillage d'un dispositif de verrouillage/déverrouillage.

On entend par siège rehausseur, les sièges permettant de surélever le niveau de l'assise. Les sièges rehausseurs sont utilisés pour les personnes de petite taille. Généralement, ils sont posés sur l'assise d'un siège de véhicule. Ces sièges rehausseurs ne comportant pas de système de retenue intégré, de fait ils utilisent la ceinture de sécurité et le système de verrouillage/ déverrouillage associé au siège sur lequel ils sont posés. Pour utiliser ces sièges rehausseurs, il faut dans un premier temps poser le siège rehausseur sur l'assise du siège, puis dans un deuxième temps que la personne s'assoie sur le siège et enfin dans un dernier temps effectuer le bouclage.

Les systèmes classiques obligent la personne assise sur son siège rehausseur à se boucler elle-même ce qui dans le cas d'un enfant est difficile compte tenu de sa position surélevée et de la longueur de ses bras. Dans le cas d'un enfant, le bouclage est effectué par un adulte qui doit se pencher par-dessus l'enfant à attacher pour effectuer le bouclage.

DE10314042 décrit d'après le préambule de la revendication 1 une surface de guidage avec un bord supérieur destiné à être disposé en regard d'une paroi latérale d'une assise d'un siège rehausseur et un bord inférieur destiné à être disposé à proximité du système de verrouillage/déverrouillage.

### PROBLEME TECHNIQUE :

Au vu dé ce qui précède, un objectif de l'invention est de fournir un dispositif permettant un bouclage simple et rapide quelle que soit la personne qui effectue le bouclage.

De plus, un autre avantage de l'invention est de s'adapter à tout type de boucle sans modification de la boucle et sans diminuer les performances du système de bouclage. En d'autres termes, le dispositif selon l'invention est capable de se fixer sur n'importe quels types de boucle sans altérer les caractéristiques de retenue du système de bouclage.

Un objectif de l'invention est de pouvoir mettre en place et de pouvoir retirer facilement le dispositif du siège rehausseur et du système de verrouillage/déverrouillage.

Un autre objectif est d'avoir un seul et même dispositif qui permette d'effectuer l'aide au bouclage à gauche ou à droite du siège sans qu'il soit nécessaire de modifier l'environnement existant.

### SOLUTION AU PROBLEME TECHNIQUE :

Pour y parvenir, l'invention propose un dispositif d'aide au verrouillage d'un pêne de ceinture de sécurité dans un système de verrouillage/déverrouillage, pour un siège rehausseur de véhicule automobile.

Selon une caractéristique générale de ce dispositif, il comporte une surface de guidage dont un bord supérieur est destiné à être disposé en regard d'une paroi latérale d'une assise du siège rehausseur et dont un bord inférieur est destiné à être disposé à proximité du système de verrouillage/déverrouillage, de façon à permettre de guider le pêne vers le système de verrouillage/ déverrouillage.

Selon d'autres caractéristiques additionnelles de l'invention :
- la surface de guidage comporte des bords latéraux en saillie, et en ce que son bord supérieur est plus long que son bord inférieur, de façon à faciliter le guidage du pêne jusqu'au boîtier,
- la surface de guidage comporte un moyen d'attache supérieur apte à coopérer avec la paroi latérale de l'assise du siège rehausseur,
- le moyen d'attache supérieur est un rebord porté par le bord supérieur de la surface de guidage et apte à coopérer avec un rebord en saillie ménagé sur une partie latérale de l'assise du siège rehausseur,
- le moyen d'attache supérieur est un moyen d'accouplement de forme cylindrique porté par le bord supérieur de la surface de guidage, apte à coopérer avec un moyen de réception de forme complémentaire porté par une partie latérale de l'assise du siège rehausseur
- le moyen d'attache supérieur est un repli porté par le bord supérieur de la surface de guidage et en ce qu'il présente une face munie d'une bande de matériau auto-agrippant apte à coopérer avec une bande complémentaire portée par une partie latérale de l'assise du siège rehausseur,
- la surface de guidage comporte au moins un moyen d'attache inférieur apte à coopérer avec le système de verrouillage,
- le moyen d'attache inférieur comporte une paroi de fond, portée par le bord inférieur de la surface de guidage, depuis laquelle s'étendent des flancs latéraux déformables élastiquement, portant chacun un retour, ledit moyen d'attache inférieur étant apte à être monté autour d'un boîtier du système de verrouillage/déverrouillage,
- la zone de jonction entre la paroi de fond et la surface de guidage, sont ménagées des moyens de blocage du déplacement vers le bas du moyen d'attache inférieur lorsqu'il est sur le boîtier,
- les moyens de blocage sont constitués par une extrémité de bords latéraux en saillie portés par la surface de guidage,
- le moyen d'attache inférieur est une paroi portée par le bord inférieur de la surface de guidage, ladite paroi comportant une bande de matériau auto-agrippant apte à coopérer avec une bande complémentaire portée par le boitier du système de verrouillage/ déverrouillage,
- le bord inférieur comporte un épaulement formant une butée de blocage du déplacement du boîtier selon une direction sensiblement verticale du moyen d'attache inférieur par rapport au boîtier,
- le moyen d'attache inférieur s'étend sur une première partie du bord inférieur de la surface de guidage et en ce qu'une deuxième partie du bord inférieur comporte une rigole de butée de fin de course et de guidage du pêne jusqu'au système de verrouillage/ déverrouillage,

Selon une autre caractéristique de l'invention, un siège rehausseur comportant une assise et comportant un moyen de réception apte à coopérer avec un moyen d'attache supérieur complémentaire d'un dispositif d'aide au verrouillage.

Selon d'autres caractéristiques additionnelles de l'invention :
- le moyen de réception est un bord en saillie ménagé sur une partie latérale de l'assise du siège rehausseur, apte à coopérer avec le moyen d'attache supérieur du dispositif d'aide formé d'un rebord,
- le moyen de réception est une gorge portée par une plaque disposée dans une cavité ménagée dans une partie latérale d'une assise du siège rehausseur, apte à coopérer avec le moyen d'attache supérieur formé par un moyen d'accouplement cylindrique,

### DESCRIPTION :

D'autres caractéristiques et avantages de la présente invention apparaîtront à la lecture de la description suivante donnée à titre d'exemple illustratif et non limitatif et faite en référence aux figures annexées dans lesquélles :
- La figure 1 illustre un système de verrouillage/déverrouillage d'un véhicule automobile,
- La figure 2 illustre un siège rehausseur associé à l'invention,
- Les figures 3a à 3d illustrent un premier mode de réalisation selon l'invention,
- Les figures 4a à 4f illustrent un deuxième mode de réalisation selon l'invention,
- Les figures 5a à 5d illustrent un mode de réalisation ne faisant pas partie de l'invention,

Les moyens analogues dans les différents modes de réalisation comportent la même numérotation.

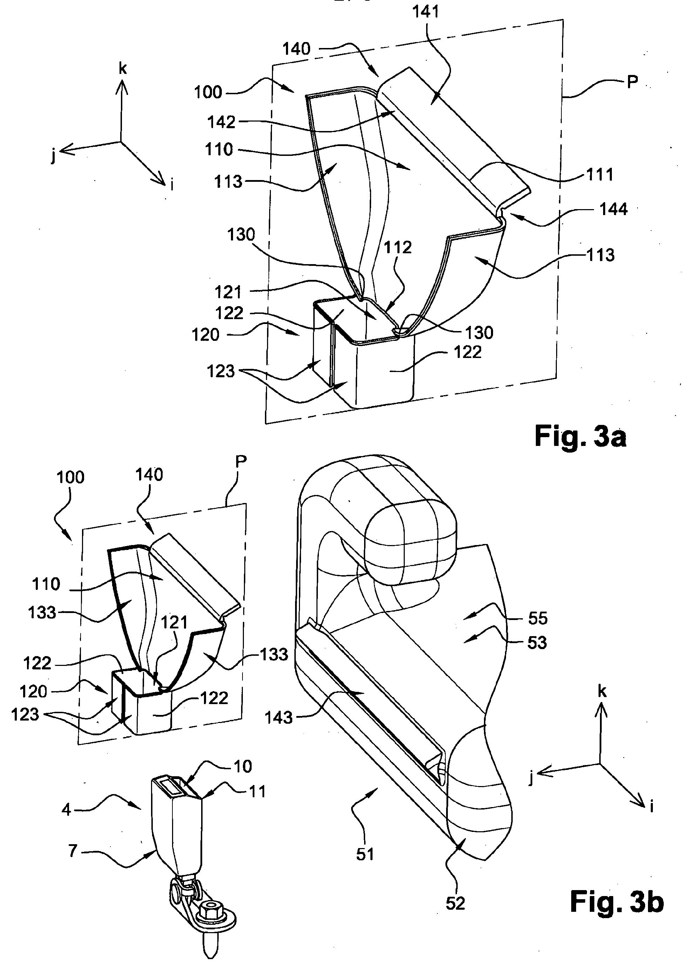

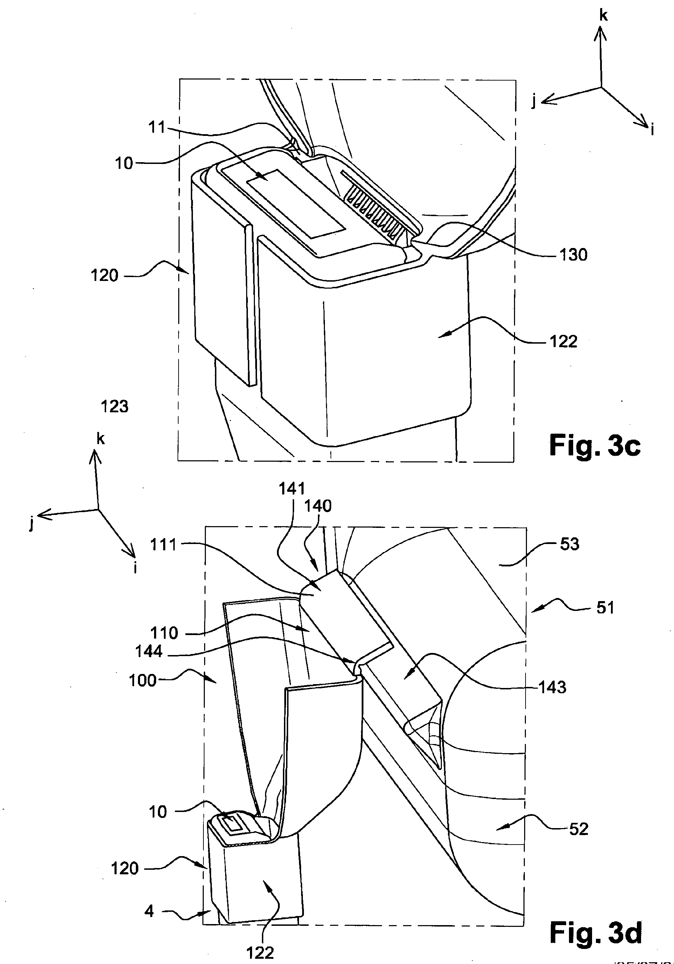

En référence à la figure 3, un exemple de réalisation d'un dispositif d'aide au verrouillage d'un pêne de ceinture de sécurité système de verrouillage/déverrouillage de siège rehausseur de véhicule automobile est décrit. Dans l'application envisagée, ce dispositif est destiné à être placé sur un système de verrouillage/déverrouillage de ceinture de sécurité et à être en appui contre un siège rehausseur.

### DESCRIPTION DU PENE :

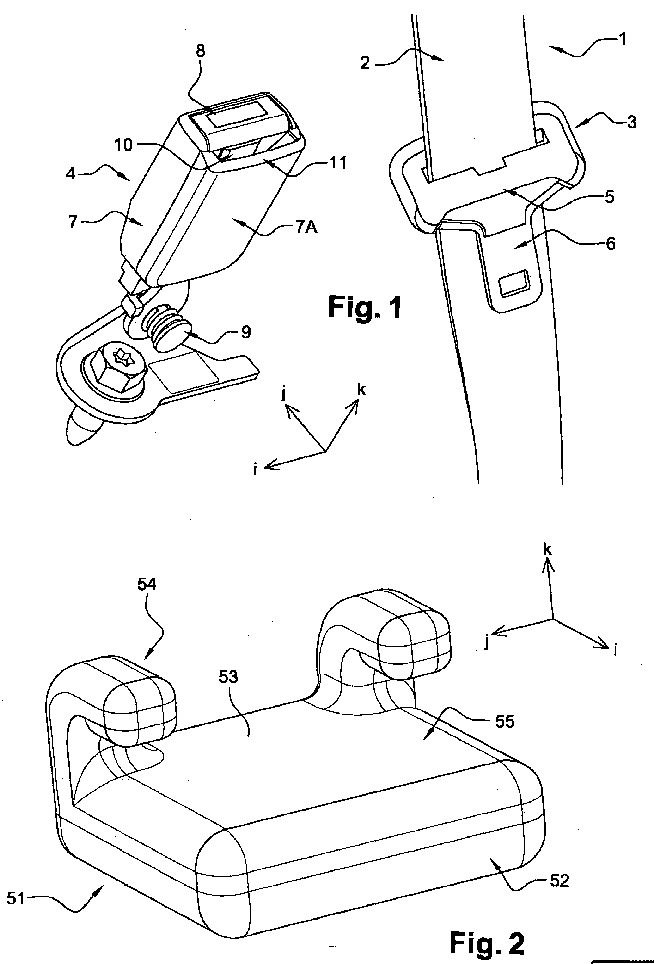

Comme illustré à la figure 1, une ceinture de sécurité 1 comporte une sangle **2** équipée d'un pêne **3**, apte à coopérer avec un dispositif de verrouillage/déverrouillage **4** du pêne **3.**

Le pêne **3** comporte un support **5** monté coulissant sur la sangle **2**, et un moyen d'accrochage **6** capable de coopérer avec les moyens de verrouillage/déverrouillage du dispositif de verrouillage/déverrouillage **4.** Le moyen d'accrochage **6** peut présenter la forme d'une plaque percée d'un trou.

Le dispositif de verrouillage/déverrouillage **4** du pêne comprend des moyens de verrouillage (non représentés) disposés à l'intérieur d'un boitier (ou carter) **7**, un bouton **8** actionnant le déverrouillage du dispositif **4** et des moyens de rattachement **9** à un élément fixe du véhicule, par exemple le siège ou le plancher véhicule. Le boitier **7** comprend, notamment, une face **7A** destinée à être en vis-à-vis de l'utilisateur d'un siège automobile associé au dispositif de verrouillage/déverrouillage **4.**

Un dispositif de verrouillage/déverrouillage **4** classique comprend, également, une ouverture supérieure **10**, située dans une partie supérieure **11** du boitier **7**, et permettant le passage du pêne **3** vers et/ou depuis sa position de verrouillage.

### DESCRIPTION DU SIEGE REHAUSSEUR :

En référence à la figure **2****,** un siège rehausseur **51** comporte une partie inférieure **52** et une partie supérieure **53** définissant une assise **55** et comportant deux accoudoirs **54.** Les deux parties inférieure **52** et supérieure **53** peuvent être fabriquées dans deux matières différentes. Par exemple, la partie inférieure **52** peut être en plastique et la partie supérieure **53** peut être composée d'une combinaison de mousse et de tissu.

### MODE DE REALISATION 1 :

En référence à la figure 3a à 3d, un dispositif d'aide au verrouillage **100** permet d'aider le guidage du pêne **3** vers le dispositif de verrouillage/déverrouillage **4** afin de boucler la ceinture d'une personne assise sur un siège rehausseur **51** posé sur l'assise d'un siège du véhicule.

Un dispositif d'aide au verrouillage **100**, tel que représenté aux figures 3a à 3d, comporte une paroi plane **110** destinée à être disposée contre une partie latérale de l'assise **55** du siège rehausseur **51** et à proximité du boîtier **7** du dispositif de verrouillage/déverrouillage **4**, de façon à former une surface de guidage du pêne de la ceinture vers le boîtier **7.**

La paroi **110** comporte un plan de symétrie **P**, ce plan de symétrie **P** est orthogonal à la paroi **110**. La paroi **110** comporte, également, un bord supérieur **111** s'étendant à proximité de l'assise **55** du siège rehausseur **51** et un bord inférieur **112** s'étendant à proximité du moyen de verrouillage/déverrouillage **4**.

Elle présente une forme générale trapézoïdale, le bord supérieur **111** étant plus long que le bord inférieur **112**, de façon à former un entonnoir.

La paroi **110** comporte des rebords en saille **113** qui s'étendent sensiblement perpendiculairement par rapport à la surface de la paroi **110**.

La paroi **110** est inclinée par rapport au plan du boîtier **7,** ceci présente l'avantage de pouvoir faciliter l'introduction du moyen d'accrochage **6** du pêne **3** dans l'ouverture **10**. En d'autres termes, l'utilisateur n'a pas la nécessité de modifier la préhension du pêne **3** en vue d'un verrouillage.

La combinaison de la forme trapézoïdale de la paroi **110** et des rebords en saillie **113** forme un entonnoir ou une goulotte de guidage et présente l'avantage de faciliter le guidage du pêne **3.**

De plus, comme la paroi **110** est symétrique la paroi par rapport au plan **P**, cette caractéristique présente l'avantage de permettre l'adaptation du dispositif d'aide au verrouillage **100** pour un bouclage à droite ou à gauche

Par ailleurs, la paroi **110** comporte un moyen d'attache inférieur **120** destiné à coopérer avec le dispositif de verrouillage/déverrouillage **4** et un moyen d'attache supérieur **140** destiné à coopérer avec l'assise **55** du siège rehausseur **51.**

Le moyen d'attache inférieur **120** apte à coopérer avec le boitier **7** du dispositif de verrouillage/déverrouillage **4**, est porté par le bord inférieur **112** de la paroi **110.** Tel que représenté à la figure 3a, il comporte une paroi de fond **121**, portée par le bord inférieur **112** et depuis laquelle s'étendent des flancs latéraux **122** dont les bords d'extrémité présentent chacun un retour **123.** Lesdits retours **123** sont orientés l'un vers l'autre selon un plan sensiblement parallèle à la paroi de fond **121**. Le moyen d'attache inférieur **120** présente une forme complémentaire de celle du boitier **7.** De plus, les flancs latéraux **122** sont aptes à se déformer élastiquement. Le moyen d'attache inférieur **120** en forme de collier déformable élastiquement est mis en place sur le boitier **7** par un mouvement de haut en bas. Le boitier **7** est alors maintenu à l'intérieur du moyen d'attache inférieur **120** en appui sur la paroi de fond **121** et sous l'action des flancs latéraux **122** ainsi que des retours **123** élastiques qui prennent appui sur les parois du boitier **7.**

Le moyen d'attaché inférieur **120** comporte des moyens de blocage **130** destiné à limiter le déplacement du dispositif d'aide au verrouillage **100** vers le bas lorsqu'il est inséré sur le boîtier **7.** Ce moyen de blocage **130** est formé par des butées localisées au niveau du bord inférieur **112** de la paroi **110**, c'est-à-dire dans une zone supérieure de la paroi de fond **121** et viennent en appui contre les extrémités latérales des bords extérieurs de l'ouverture supérieure **10** du boitier **7.**

Les moyens de blocage **130** peuvent être formés par une extrémité inférieure des rebords en saillie **113** venant en butée contre les extrémités des bords de la partie supérieure **11** du boîtier **7.**

Le dispositif d'aide au verrouillage **100** comporte, également, un moyen d'attache supérieur **140** destiné à coopérer avec le siège rehausseur **51.** Le moyen d'attache supérieur **140** est formé d'un rebord **141** relié au bord supérieur **111** par une zone de jonction **142.** Le rebord **141** est, comme représenté aux figures 3b et 3d, destiné à venir en appui sur un bord en saillie **143** du siège rehausseur **51.** La zone de jonction **142** présente une diminution d'épaisseur **144** qui permet de former une liaison charnière entre la paroi **110** et le rebord **141.** La diminution d'épaisseur **144** peut être obtenue par un évidement de matière, de type rainure par exemple, ou en encore par moulage. La liaison charnière présente l'avantage de pouvoir orienter le rebord **141** de sorte qu'il soit toujours parallèle au plan du bord en saillie **143** sur lequel il doit venir reposer.

L'utilisateur, lorsqu'il souhaite boucler la ceinture, amène le moyen d'accrochage **6** du pêne en contact avec la paroi **110** et le fait glisser le long de ladite paroi **110** jusqu'à ce qu'il pénètre dans l'ouverture **10** du boîtier **7** et coopère avec les moyens de verrouillage. La trajectoire correcte du moyen d'accrochage **6** est alors assurée par la forme en entonnoir de la paroi **110** et par les rebords en saillie **113**, qui empêchent toute déviation du moyen d'accrochage **6.**

### MODE DE REALISATION 2 :

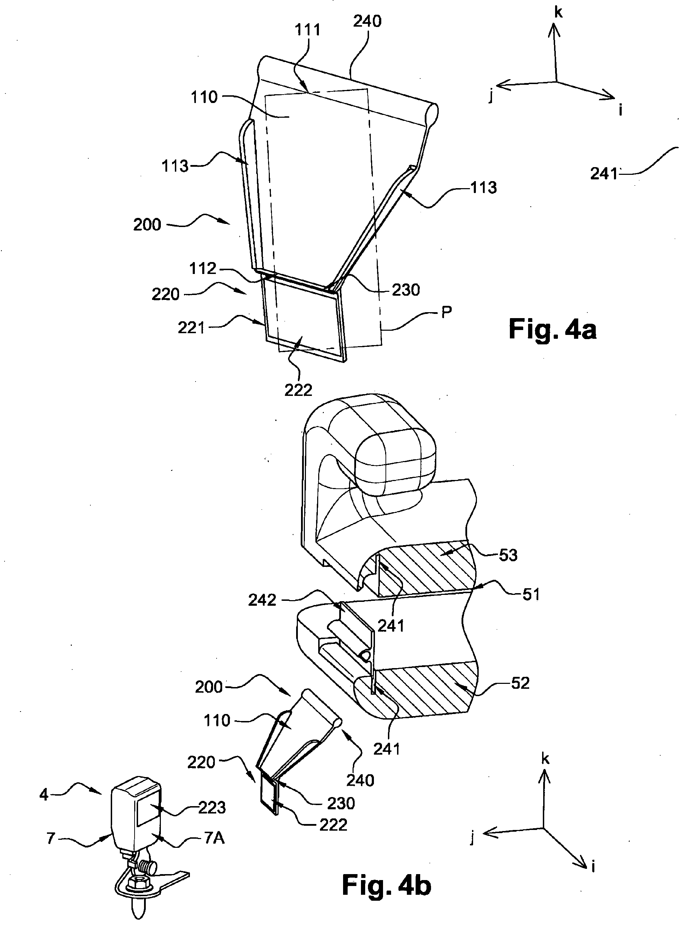

Selon un autre mode de réalisation présenté aux figures 4a à 4f, un dispositif d'aide au verrouillage **200** se démarque de celui du premier mode de réalisation en ce que les moyens d'attache inférieur **220** et supérieur **240,** le moyen de blocage **230** sont différents.

Le dispositif d'aide au verrouillage **200** comporte une paroi de guidage **110** analogue à celle du dispositif **100** selon le premier mode de réalisation. L'inclinaison de la paroi **110** par rapport à un moyen de liaison avec le boitier **7**, peut être identique à celles du premier mode de réalisation présenté.

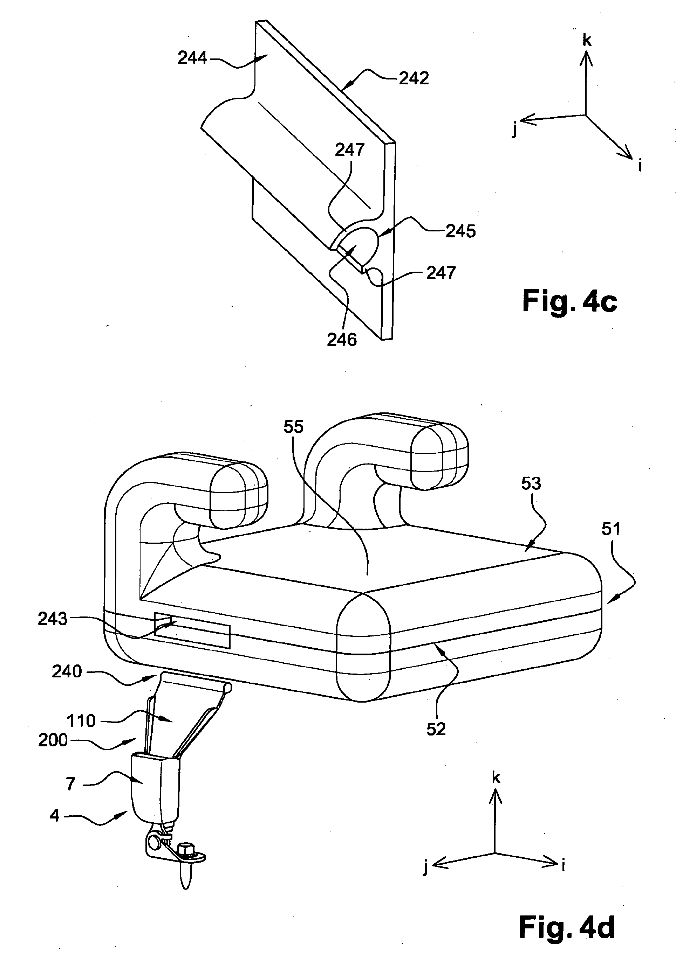

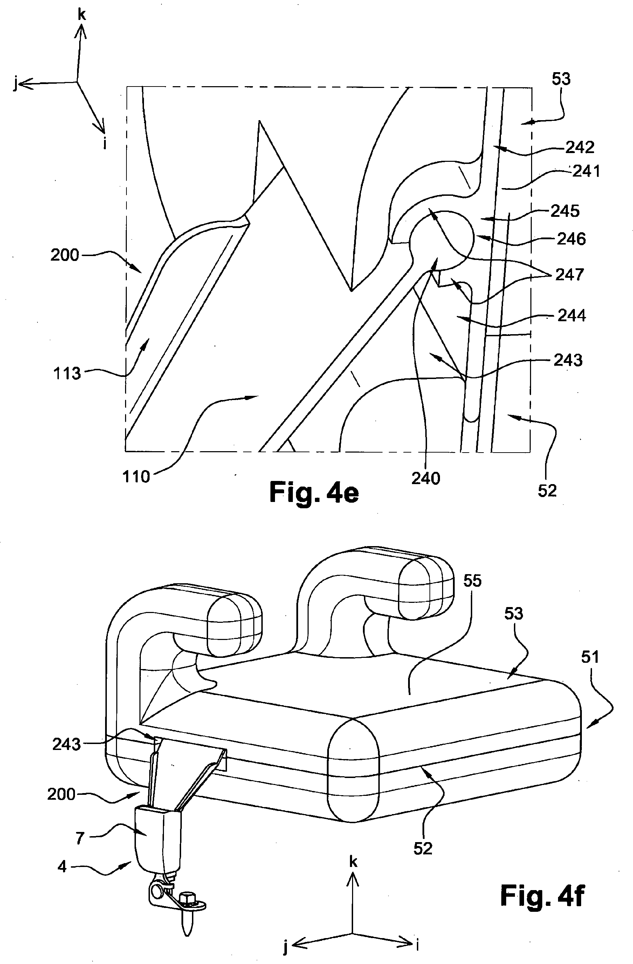

Selon le mode de réalisation présenté aux figures 4a, 4b et aux figures 4d à 4f, le dispositif d'aide au verrouillage **200** comprend un moyen d'attache inférieur **220** avec le boitier **7** du dispositif de verrouillage/déverrouillage **4.** Le moyen d'attache inférieur **220** présente, la forme d'une plaque dont l'une des faces **221** est destinée à venir en vis-à-vis du boîtier **7** et l'autre face (non représentée sur les figures 4) est destinée à venir en vis-à-vis de la partie latérale de l'assise **55** du siège rehausseur **51.** Le moyen d'attache inférieur **220**, tel que représenté, comporte une première bande en matériau auto-agrippant **222**, plus connu sous la marque velcro®, apte à coopérer avec une deuxième bande complémentaire portée par le boîtier **7.**

Ainsi, la première bande **222** est placée au niveau de la face **221** du moyen d'attache inférieur **220** du dispositif de verrouillage/déverrouillage. La deuxième bande **223** est placée sur la face **7A** du boitier **7.**

Selon le mode de réalisation présenté, le dispositif d'aide au verrouillage **200** comporte un épaulement **230.** Ledit épaulement **230** est défini par une nervure située entre le moyen d'attache inférieur **220** et la paroi **110.** L'épaulement **230** s'étend le long bord inférieur **112.** En d'autres termes l'épaulement **230** est destiné à s'étendre le long du bord de l'ouverture **10** lorsque le dispositif d'aide au verrouillage **200** est monté sur le boitier **7**, de façon à former un moyen de blocage permettant de limiter le déplacement vers le bas du moyen d'attache inférieur **220** par rapport au boîtier **7.**

Le dispositif d'aide au verrouillage **200** comprend, dans ce mode de réalisation, un moyen d'attache supérieur **240** apte à coopérer avec un moyen complémentaire de l'assise du siège rehausseur **51.**

Le moyen d'attache supérieur **240** du dispositif d'aide au verrouillage **200** est porté par le bord supérieur **111** de la paroi **110** et présente une forme cylindrique.

Tel que représenté aux figures 4b et 4d à 4f, la partie latérale de l'assise **55** du siège rehausseur **51** présente, une cavité **241** dont l'ouverture **243** débouche dans la paroi latérale de l'assise **55** du siège rehausseur **51.**

La cavité **241** peut être située à cheval entre la partie supérieure **53** et la partie inférieur **52** du siège rehausseur **51.**

Une plaque **242,** comme représentée aux figures 4b à 4e, est destinée à être placée dans la cavité **241** du siège rehausseur **51.** La plaque **242** présente ici une forme sensiblement rectangulaire complémentaire de celle de la cavité **241.** Un jeu entre la cavité **241** et la plaque **242** est prévu de façon à ne pas perturber le montage de la partie supérieure **53** avec la partie inférieure **52.** La plaque **242** comporte sur l'une de ses faces **244** en regard de l'ouverture **243** un élément de réception **245** du moyen d'attache supérieur **240** du dispositif d'aide au verrouillage **200.** Ainsi, l'élément de réception **245** se trouve en vis-à-vis de l'ouverture **243** de la cavité **241.**

L'élément de réception **245** comporte une gorge **246** dont la forme est complémentaire de celle du moyen d'attache supérieur **240.** Cette gorge **246** est définie par deux parois **247** capables de se déformer élastiquement.

Le couplage du moyen d'attache supérieur **240** et de l'élément de réception **245** autorise cependant une certaine rotation du dispositif.

Le siège rehausseur est livré déjà pré-équipé de la plaque **242.** Comme représenté aux figures 4b et 4d à 4f, le montage de la plaque **242** dans l'assise du siège rehausseur **51** s'effectue lors de la fabrication du siège rehausseur. La plaque **242** est d'abord placée dans la cavité **241** de la partie inférieure **52** de l'assise **55** de sorte que l'élément de réception **245** soit accessible par l'ouverture **243.** Ensuite la partie supérieure **53** de l'assise est montée sur la partie inférieure **52.**

Pour fixer le moyen d'attache supérieur **240**, il suffit de le faire passer au travers de l'ouverture **243**, puis de l'insérer dans la gorge **246** par une action de pression. Sous l'effet de la pression exercée, les parois **247** vont se déformer élastiquement et s'ouvrir pour laisser passer le moyen d'attache supérieur **240**, La pression transmise au moyen d'accouplement **230** exerce sur les parois **247**, définissant la gorge **246**, une déformation élastique sur chacun des parois **247.** Une fois le moyen d'attache supérieur **240** complètement inséré dans la gorge **246**, les parois **247** vont se refermer sur ledit moyen d'attache supérieur **240.** L'effort des parois **247** sur le moyen d'attache supérieur **240** permet de maintenir le moyen d'attache supérieur **240** dans la gorge **246** tout en permettant la rotation du moyen d'attache supérieur 230 autour de son axe.

Le fait que la plaque **242** ait un jeu présente, en outre, l'avantage d'assurer un assemblage sans contrainte du moyen d'attache inférieur **220** avec le boitier **7.**

Selon une variante non représentée, le moyen d'attache supérieur **240** dans la gorge peut être monté axialement, selon l'axe i, dans la gorge **246.** Ce montage permet de rendre le dispositif d'aide au verrouillage **200** solidaire du siège rehausseur **51.**

Selon un mode de réalisation, non représenté, le siège rehausseur **51** peut comporter deux cavités opposées sur chacune des parois latérales de son assise. Le siège rehausseur **51** est alors équipé dans ce cas de deux plaques, une plaque **242** par cavité, permettant de coupler le siège rehausseur **51** avec le dispositif d'aide au verrouillage **200** pour un bouclage à gauche ou à droite.

L'utilisateur, lorsqu'il souhaite boucler la ceinture, amène le moyen d'accrochage **6** du pêne en contact avec la paroi **110** et le fait glisser le long de ladite paroi **110** jusqu'à ce qu'il pénètre dans l'ouverture 10 du boîtier **7** et coopère avec les moyens de verrouillage. La trajectoire correcte du moyen d'accrochage **6** est alors assurée par la forme en entonnoir de la paroi **110** et par les rebords **143**, qui empêchent toute déviation du moyen d'accrochage **6**.

### MODE DE REALISATION 3 :

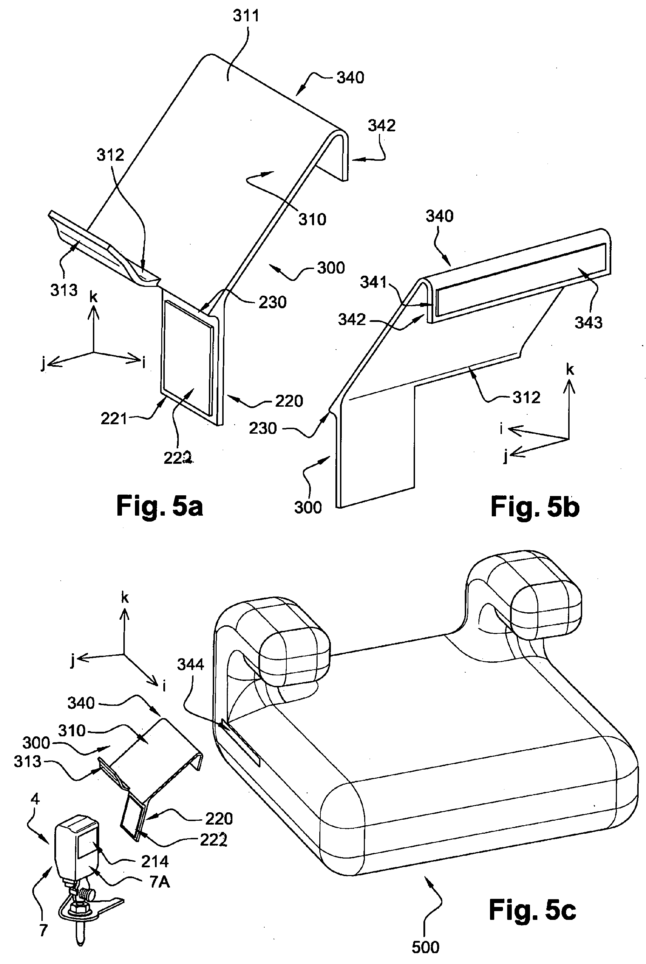

Selon un mode de réalisation ne faisant pas partie de l'invention présenté à la figure 5a à 5d, un dispositif d'aide **300** se démarque de celui du deuxième mode de réalisation par sa paroi de guidage **310** et par son moyen d'attache supérieur **340** au siège rehausseur **500.** Ainsi, le dispositif d'aide **300** comprend un moyen d'attache inférieur identique au moyen **220** et une butée de blocage identique à l'épaulement **230** du deuxième mode de réalisation.

De plus, ici, l'inclinaison de la paroi de guidage **310** par rapport au moyen de liaison peut être identique à celle du deuxième mode de réalisation.

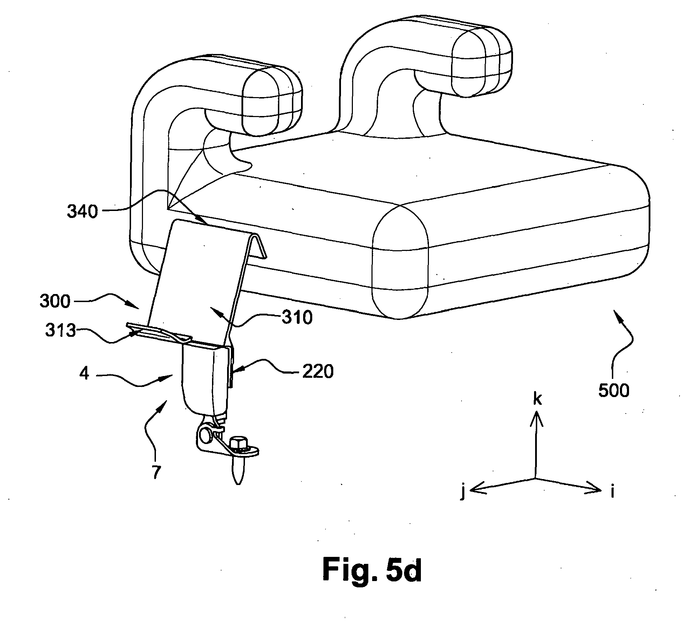

Alternativement, selon le mode de réalisation introduit aux figures 5c et 5d, un siège rehausseur **500** présente une seule partie, elle peut être obtenue par moulage par exemple.

Le dispositif d'aide **300** comporte une paroi de guidage **310** formant la surface de guidage **310** présentant une forme sensiblement rectangulaire et comporte un bord supérieur **311.** La largeur de la surface de guidage **310** est supérieure à la largeur du boitier **7.**

Dans le dispositif d'aide **300**, selon ce troisième mode de réalisation présenté aux figures 5a à 5d, le moyen d'attache supérieur **340** comporte un repli **341** formé sur le bord supérieur de la surface de guidage **310** qui s'étend dans un plan sensiblement parallèle au plan du moyen d'attache inférieur **220.** La surface **342** du repli **341** comporte une première bande **343** en matériau agrippant destinée à coopérer avec une bande **344** en matériau auto-agrippant portée par la paroi latérale de l'assise **55** du siège rehausseur **500.**

Le moyen d'attache inférieur **220** s'étend, seulement, le long d'une portion du bord inférieur **312** de la surface de guidage **310**, une rigole **313** s'étendant le long du reste du bord inférieur **312** La rigole **313** est formée par un retour du bord inférieur **312.** La rigole **313** présente l'avantage de limiter la course du pêne le long de la surface de guidage **310** mais ensuite de guider le pêne **3** jusqu'au dispositif de verrouillage/déverrouillage **4.**

Ainsi, l'utilisateur, lorsqu'il souhaite utiliser le dispositif, amène le moyen d'accrochage **6** du pêne **3** en contact avec la surface de guidage **310** et le fait glisser le long de ladite surface de guidage **310** jusqu'à ce qu'il pénètre dans l'ouverture **10** et coopère avec les moyens de verrouillage. La trajectoire correcte du moyen d'accrochage **6** est alors assurée par la largeur de la surface de guidage **310** en combinaison avec la rigole **313**, qui permet d'assurer le contact entre le moyen d'accrochage 6 et le dispositif d'aide au verrouillage **300.**

## Revendications

1. Dispositif d'aide au verrouillage d'un pêne de ceinture (**3**) de sécurité dans un système de verrouillage/déverrouillage (**4**), pour un siège rehausseur (**51**) de véhicule automobile, le dispositif comportant une surface de guidage (**110**, ) dont un bord supérieur (**111**) est destiné à être disposé en regard d'une paroi latérale d'une assise (55) du siège rehausseur (**51**) et dont un bord inférieur (**112**) est destiné à être disposé à proximité du système de verrouillage/déverrouillage (**4**), de façon à permettre de guider le pêne (**3**) vers le système de verrouillage/ déverrouillage (**4**), **caractérisé en ce que** la surface de guidage (**110**) comporte des bords latéraux en saillie (**113**), et **en ce que** la surface de guidage (110) présente une forme générale trapézoïdale, le bord supérieur (**111**) étant plus long que le bord inférieur (**112**), de façon à former un entonnoir et de façon à faciliter le guidage du pêne (**3**) jusqu'au boîtier (**7**) du système de verrouillage/ déverrouillage (**4**).

2. Dispositif selon la revendication 1 , **caractérisé en ce que** la surface de guidage (**110**) comporte un moyen d'attache supérieur (**140**, **240**) apte à coopérer avec la paroi latérale de l'assise (**55**) du siège rehausseur (**51**, **500**).

3. Dispositif selon la revendication 2, **caractérisé en ce que** le moyen d'attache supérieur est un rebord (**141**) porté par le bord supérieur (**111**) de la surface de guidage (**110**) et apte à coopérer avec un rebord en saillie (**143**) ménagé sur une partie latérale de l'assise du siège rehausseur (**51**).

4. Dispositif selon la revendication 2, **caractérisé en ce que** le moyen d'attache supérieur (**240**) est un moyen d'accouplement de forme cylindrique porté par le bord supérieur (**111**) de la surface de guidage (**110**), apte à coopérer avec un moyen de réception de forme complémentaire (**245**) porté par une partie latérale de l'assise du siège rehausseur (**51**).

5. Dispositif selon l'une quelconque des revendications 1 à 5, **caractérisé en ce que** la surface de guidage (**110**) comporte au moins un moyen d'attache inférieur (**120**, **220**) apte à coopérer avec le système de verrouillage (**4**).

6. Dispositif selon la revendication 5, **caractérisé en ce que** le moyen d'attache inférieur (**120**) comporte une paroi de fond (**121**), portée par le bord inférieur (**111**) de la surface de guidage (**110**), depuis laquelle s'étendent des flancs latéraux déformables élastiquement (**122**), portant chacun un retour (**123**), ledit moyen d'attache inférieur (**120**) étant apte à être monté autour d'un boîtier (**7**) du système de verrouillage/déverrouillage (**4**).

7. Dispositif selon la revendication 6, **caractérisé en ce que**, dans la zone de jonction entre la paroi de fond (**121**) et la surface de guidage (**110**), sont ménagées des moyens de blocage (**130**) du déplacement vers le bas du moyen d'attache inférieur (**120**) lorsqu'il est sur le boîtier (**7**).

8. Dispositif selon la revendication 7 **caractérisé en ce que** les moyens de blocage (**130**) sont constituées par une extrémité de bords latéraux en saillie (**113**) portés par la surface de guidage (**110**).

9. Dispositif selon la revendication 6, **caractérisé en ce que** le moyen d'attache inférieur (**220**) est une paroi portée par le bord inférieur (**112**, **312**) de la surface de guidage (**110**), ladite paroi comportant une bande de matériau auto-agrippant (**222**) apte à coopérer avec une bande complémentaire (**223**) portée par le boitier (**7**) du système de verrouillage/ déverrouillage (**4**).

10. Dispositif selon la revendication 9, **caractérisé en ce que** le bord inférieur (**112**) comporte un épaulement (**230**) formant une butée de blocage du déplacement du boîtier (**7**) selon une direction sensiblement verticale du moyen d'attache inférieur (**220**) par rapport au boîtier (**7**).

11. Siège rehausseur (**51, 500**) comportant une assise (**55**) et comportant un moyen de réception apte à coopérer avec un moyen d'attache supérieur complémentaire (**140, 240**) d'un dispositif (**100**, **200**) selon l'une quelconque des revendications 1 à 10.

12. Siège rehausseur (**51**) selon la revendication 11, **caractérisé en ce que** le moyen de réception est un bord en saillie (**143**) ménagé sur une partie latérale de l'assise (**55**) du siège rehausseur (**51**), apte à coopérer avec le moyen d'attache supérieur du dispositif d'aide (**100**) formé d'un rebord (**141**).

13. Siège rehausseur (**51**) selon la revendication 11, **caractérisé en ce que** le moyen de réception est une gorge (**246**) portée par une plaque (**242**) disposée dans une cavité (**241**) ménagée dans une partie latérale d'une assise (**55**) du siège rehausseur (**51**), apte à coopérer avec le moyen d'attache supérieur (**240**) formé par un moyen d'accouplement cylindrique.

## Patentansprüche

1. Hilfsvorrichtung zur Verriegelung einer Steckzunge eines Sicherheitsgurts (3) in einen Verriegelungs-/Entriegelungssystem (4) für eine Sitzerhöhung (51) eines Kraftfahrzeugs, wobei die Vorrichtung eine Führungsfläche (110) umfasst, von der eine obere Kante (111) dazu bestimmt ist, gegenüber einer Seitenwand einer Sitzfläche (55) der Sitzerhöhung (51) angeordnet zu werden, und von der eine untere Kante (112) dazu bestimmt ist, in der Nähe des Verriegelungs-/Entriegelungssystems (4) angeordnet zu werden, dergestalt, dass die Führung der Steckzunge (3) in Richtung des Verriegelungs-/Entriegelungssystems (4) gestattet wird, **dadurch gekennzeichnet, dass** die Führungsfläche (110) hervorstehende seitliche Kanten (113) umfasst und dass die Führungsfläche (110) eine allgemein trapezförmige Form besitzt, wobei die obere Kante (111) länger als die untere Kante (112) ist, dergestalt, dass ein Trichter gebildet wird, und dergestalt, dass die Führung der Steckzunge (3) bis zum Gehäuse (7) des Verriegelungs-/Entriegelungssystems (4) erleichtert wird.

2. Vorrichtung nach Anspruch 1, **dadurch gekennzeichnet, dass** die Führungsfläche (110) ein oberes Befestigungsmittel (140, 240) umfasst, das in der Lage ist, mit der seitlichen Wand der Sitzfläche (55) der Sitzerhöhung (51, 500) zusammenzuwirken.

3. Vorrichtung nach Anspruch 2, **dadurch gekennzeichnet, dass** das obere Befestigungsmittel ein Rand (141) ist, der durch die obere Kante (111) der Führungsfläche (110) getragen wird und in der Lage ist, mit einem hervorstehenden Rand (143) zusammenzuwirken, der an einem seitlichen Teil der Sitzfläche der Sitzerhöhung (51) angeordnet ist.

4. Vorrichtung nach Anspruch 2, **dadurch gekennzeichnet, dass** das obere Befestigungsmittel (240) ein Verbindungsmittel mit zylindrischer Form ist, das durch die obere Kante (111) der Führungsfläche (110) getragen wird und in der Lage ist, mit einem Aufnahmemittel mit komplementärer Form (245) zusammenzuwirken, das durch einen seitlichen Teil der Sitzfläche der Sitzerhöhung (51) getragen wird.

5. Vorrichtung nach einem der Ansprüche 1 bis 5, **dadurch gekennzeichnet, dass** die Führungsfläche (110) mindestens ein unteres Befestigungsmittel (120, 220) aufweist, das in der Lage ist, mit dem Verriegelungssystem (4) zusammenzuwirken.

6. Vorrichtung nach Anspruch 5, **dadurch gekennzeichnet, dass** das untere Befestigungsmittel (120) eine Bodenwand (121) aufweist, die durch die untere Kante (111) der Führungsfläche (110) getragen wird, von der ausgehend sich elastisch verformbare seitliche Flanken (122) erstrecken, die jeweils eine Abwinklung (123) tragen, wobei das untere Befestigungsmittel (120) in der Lage ist, um ein Gehäuse (7) des Verriegelungs-/Entriegelungssystems (4) herum angebracht zu werden.

7. Vorrichtung nach Anspruch 6, **dadurch gekennzeichnet, dass** im Verbindungsbereich zwischen der Bodenwand (121) und der Führungsfläche (110) Mittel zur Blockierung (130) einer nach unten gerichteten Bewegung des unteren Befestigungsmittels (120), wenn es sich am Gehäuse (7) befindet, angeordnet sind.

8. Vorrichtung nach Anspruch 7, **dadurch gekennzeichnet, dass** die Mittel zur Blockierung (130) durch ein Ende von hervorstehenden seitlichen Kanten (113), die durch die Führungsfläche (110) getragen werden, gebildet werden.

9. Vorrichtung nach Anspruch 6, **dadurch gekennzeichnet, dass** das untere Befestigungsmittel (220) eine Wand ist, die durch die untere Kante (112, 312) der Führungsfläche (110) getragen wird, wobei die Wand einen Streifen aus selbsthaftendem Material (222) aufweist, der in der Lage ist, mit einem komplementären Streifen (223), der durch das Gehäuse (7) des Verriegelungs-/Entriegelungssystems (4) getragen wird, zusammenzuwirken.

10. Vorrichtung nach Anspruch 9, **dadurch gekennzeichnet, dass** die untere Kante (112) einen Ansatz (230) aufweist, der einen Anschlag zur Blockierung einer Bewegung des Gehäuses (7) in einer weitestgehend senkrechten Richtung des unteren Befestigungsmittels (220) bezüglich des Gehäuses (7) aufweist.

11. Sitzerhöhung (51, 500), umfassend eine Sitzfläche (55) und umfassend ein Aufnahmemittel, das in der Lage ist, mit einem komplementären oberen Befestigungsmittel (140, 240) einer Vorrichtung (100, 200) nach einem der Ansprüche 1 bis 10 zusammenzuwirken.

12. Sitzerhöhung (51) nach Anspruch 11, **dadurch gekennzeichnet, dass** das Aufnahmemittel eine hervorstehende Kante (143) ist, die an einem seitlichen Teil der Sitzfläche (55) der Sitzerhöhung (51) angeordnet ist und die in der Lage ist, mit dem oberen Befestigungsmittel der Hilfsvorrichtung (100), das durch einen Rand (141) gebildet wird, zusammenzuwirken.

13. Sitzerhöhung (51) nach Anspruch 11, **dadurch gekennzeichnet, dass** das Aufnahmemittel eine Nut (246) ist, die durch eine Platte (242) getragen wird, die in einem Hohlraum (241) angeordnet ist, der in einem seitlichen Teil einer Sitzfläche (55) der Sitzerhöhung (51) ausgebildet ist, welche in der Lage ist, mit dem oberen Befestigungsmittel (240), das durch ein zylindrisches Verbindungsmittel gebildet wird, zusammenwirken.

## Claims

1. Device for assisting locking of a tongue of a safety belt (3) in a locking/unlocking system (4) for a motor vehicle booster seat (51), the device including a guide surface (110), an upper edge (111) of which is intended to be disposed facing a lateral wall of a base (55) of the booster seat (51) and a lower edge (112) of which is intended to be disposed in the vicinity of the locking/unlocking system (4) so as to make it possible to guide the tongue (3) toward the locking/unlocking system (4), **characterized in that** the guide surface (110) includes projecting lateral edges (113) and **in that** the guide surface (110) has a trapezoidal general shape, the upper edge (111) being longer than the lower edge (112), so as to form a funnel and so as to facilitate guiding the tongue (3) to the casing (7) of the locking/unlocking system (4).

2. Device according to Claim 1, **characterized in that** the guide surface (110) includes upper attachment means (140, 240) adapted to cooperate with the lateral wall of the base (55) of the booster seat (51, 500).

3. Device according to Claim 2, **characterized in that** the upper attachment means consist of a rim (141) carried by the upper edge (111) of the guide surface (110) and adapted to cooperate with a projecting rim (143) on a lateral part of the base of the booster seat (51).

4. Device according to Claim 2, **characterized in that** the upper attachment means (240) consist of cylindrical coupling means carried by the upper edge (111) of the guide surface (110) adapted to cooperate with receiving means (245) of complementary shape carried by a lateral part of the base of the booster seat (51).

5. Device according to any one of Claims 1 to 5, **characterized in that** the guide surface (110) includes lower attachment means (120, 220) adapted to cooperate with the locking system (4).

6. Device according to Claim 5, **characterized in that** the lower attachment means (120) include a bottom wall (121) carried by the lower edge (111) of the guide surface (110) from which extend elastically deformable lateral flanks (122) each carrying a return (123), said lower attachment means (120) being adapted to be mounted around a casing (7) of the locking/unlocking system (4).

7. Device according to Claim 6, **characterized in that** means (130) are provided in the joining area between the bottom wall (121) and the guide surface (110) for immobilizing the lower attachment means (120) against downward movement when it is on the casing (7).

8. Device according to Claim 7, **characterized in that** the immobilizing means (130) consist of an extremity of projecting lateral edges (113) carried by the guide surface (110).

9. Device according to Claim 6, **characterized in that** the lower attachment means (220) consist of a wall carried by the lower edge (112, 312) of the guide surface (110), said wall including a strip of self-grip material (222) adapted to cooperate with a complementary strip (223) carried by the casing (7) of the locking/unlocking system (4).

10. Device according to Claim 9, **characterized in that** the lower edge (112) includes a shoulder (230) forming an abutment for immobilizing the casing (7) against movement in a substantially vertical direction of the lower attachment means (220) relative to the casing (7).

11. Booster seat (51, 500) including a base (55) and including receiving means adapted to cooperate with complementary upper attachment means (140, 240) of a device (100, 200) according to any one of Claims 1 to 10.

12. Booster seat (51) according to Claim 11, **characterized in that** the receiving means consist of a projecting edge (143) provided on a lateral part of the base (55) of the booster seat (51) adapted to cooperate with the upper attachment means of the assistance device (100) formed by a rim (141).

13. Booster seat (51) according to Claim 11, **characterized in that** the receiving means consist of a groove (246) carried by a plate (242) disposed in a cavity (241) provided in a lateral part of a base (55) of the booster seat (51) adapted to cooperate with the upper attachment means (240) formed by cylindrical coupling means.
